# EUROPEAN PATENT SPECIFICATION

(11) **EP 0 703 144 B1**
(45) Date of publication and mention of the grant of the patent: **12.01.2000**
(21) Application number: 94202695.6
(22) Date of filing: 20.09.1994
(51) Int. Cl.: B64G 1/00, B64G 1/22

(54) **Method for manufacturing a bearing structure for a spacecraft, and bearing structure**
Methode zur Herstellung einer Tragstruktur eines Raumfahrzeuges, und Tragstruktur
Méthode pour fabriquer une structure porteuse d'un engin spatial, et structure porteuse

(43) Date of publication of application: 27.03.1996
(73) Proprietor: Fokker Space B.V., 2303 DB Leiden (NL)
(72) Inventor: Ter Wijlen, Herman, NL-7558 TG HENGELO (NL); Van Herwaarden, Justus Philip, NL-2241 WC WASSENAAR (NL)
(74) Representative: de Bruijn, Leendert C.

(56) References cited:
- FR-A- 2 308 499
- GB-A- 2 173 467
- US-A- 3 700 535
- US-A- 3 960 626
- US-A- 4 851 065

## Description

The invention is related to the subject of manufacturing of a spacecraft, in particular a structural component thereof. In general, spacecraft are equipped with a central structure onto which the functional components of the satellite are mounted. This structure is connecected to the launcher, and is designed to withstand the loads which occur during launch. These loads comprise mechanical vibrations as well as mass forces which can reach considerable magnitudes, dependent on the accelerations.

According to a prior art method, as known from US-A-4009851, the central structure consists of an elongated cylindrical member having a frustoconically shaped lower end. This structure is composed of aluminium alloy sheets which are welded or riveted together. Onto this cylinder, bulkheads are attached which are composed of aluminium alloy sheets as well, or of a honeycomb material. The ends of the structure are provided with attachment rings.

According to a further prior art method, as known from GB-A-2173467, a similar central structure is formed of reinforcing fibres in a metal matrix. Although such material has the advantage of low weight, additional reinforcements are required in the transition zone between cylindrical and frustoconically shaped part of the structure. Due to the sharp change in direction in the load path, stress concentrations are generated here which necessitate the application of these reinforcements.

The object of the invention is therefore to provide a method for manufacturing such structure which is lightweight and has also better strength and stiffness characteristics. This object is achieved by means of a method for manufacturing the bearing structure of a spacecraft, which structure has a shaped lower part adapted to be fitted on top of a launcher, comprising the steps of providing a mandrel having a cross-section through its longitudinal axis defining an at least partially hyperbolic or exponential shape for the bearing structure, winding fibres onto the mandrel, fixing the fibres by applying a matrix material, and removing the bearing structure thus formed from the mandrel.

According to this method, the bearing structure is manufactured as a one part structure with a shape adapted to the expected loadings, avoiding the occurrence of stress concentrations. The winding process may be carried out in such a way that the thickness of the structure may be varied, in dependence of the stresses to be expected. Therefore, it is no longer necessary to apply additional reinforcements. Furthermore, the desired shape can easily be obtained by providing a suitably formed mandrel.

In the production process, use is made of the thermal expansion of the mandrel. Upon heating the mandrel and product for curing the matrix material, said mandrel expands and thus provides pressure during the curing process in order to improve the quality of the finished fibre/matrix material. After curing, the mandrel and product are cooled down, whereby, due to the larger shrink of the mandrel, the product may removed easily.

A further advantage of the manufacturing process according to the invention is the high dimensional accuracy of the product thus obtained, which further improves its mechanical properties.

The strength and stiffness properties of the structure may be improved further by a proper selection of the fibre orientation. In this respect, preferably part of the filament material is wound at an angle of approximately 35 degrees with respect to the axis of the mandrel.

Furthermore, preferably part of the filament material is wound at an angle of approximately 90 degrees with respect to the axis of the mandrel. Thereby, a better buckling behaviour is obtained. Good results are obtained in case the outer layer and the inner layer consist of filament material wound at an angle of approximately 90 degrees.

Such outer layers give an excellent support to the other layers of filament material wound at an angle of 35 degrees, resulting in a very strong and stable structure. In effect, the monocoque structure thus obtained is at least as good as a sandwich structure.

In a preferred embodiment, the lower part has a hyperbolic or exponential shape and the upper part is cylindrical. The hyperbolic or exponential shape enables the winding process to be carried out in a proper way.

At the ends of both the upper and the lower part reinforcing rings can be provided. At least one supporting bulkhead is provided on the outer surface of the structure. Onto these bulkheads, the functional components of a satellite may be mounted, as well as the outer skin structure.

A preferred embodiment of the spacecraft according to the invention will be discussed further with reference to an embodiment shown in the figures.
Figure 1 and 1a show the central body according to the invention in perspective view.
Figure 2 shows an overview of a satellite structure equipped with the central body according to figure 1.

The central body shown in the figures has a cylindrical upper part 1 and a hyperbolic lower part 2. These parts are integral, and have been obtained by a winding process in which fibres have been wound onto a correspondingly shaped mandrel. Subsequently, the wound fibres have been impregnated with e.g. a resin, such that after curing of the resin a stiff and strong product is obtained.

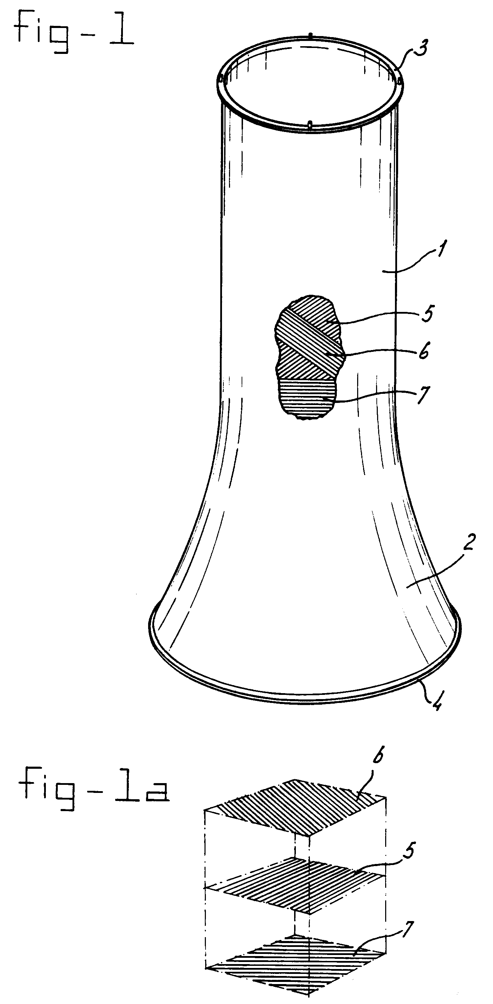

As shown in figures 1 and 1a, the fibres are oriented in different ways. Fibres 5 are oriented at an angle of 35 degrees with respect to the center line of the body 1, 2, fibres 6 at -35 degrees and fibres 7 at 90 degrees. These fibres are for instance of carbon reinforced plastic (M46J); an example of the resin applied is Shell Epon 9400/9450. Other types of fibres include glass fibres or aramid fibres. Furthermore, the resin may be either a thermoplast or thermoharder.

The total thickness of the body skin is preferably about 3.0 mm, while the fibre content of the cured product is larger than 60% by volume.

Due to the hyperbolic shape of the lower part, the winding process can be carried out in a proper way.

At both the upper and lower edge of this body, metal reinforcing rings 3 resp 4 have been provided.

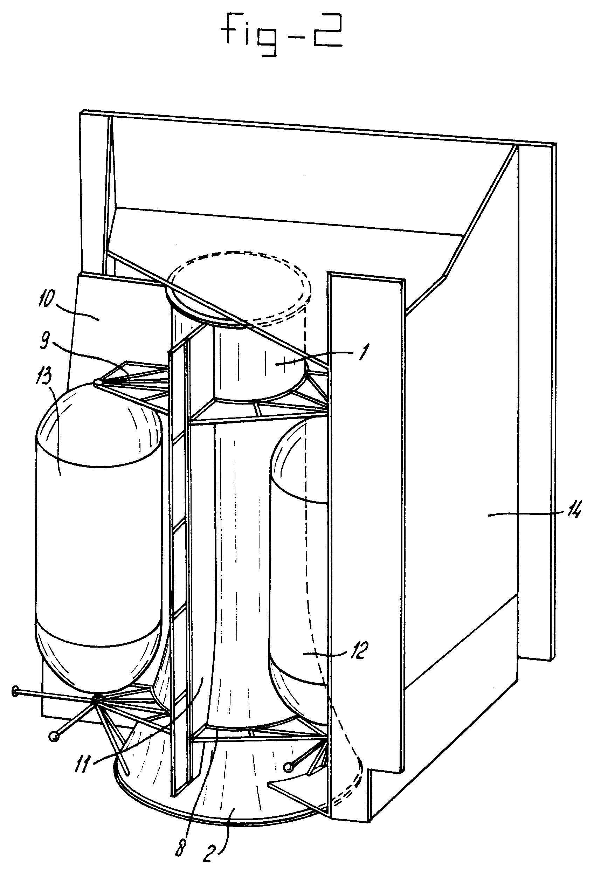

In the satellite structure shown in figure 2, the central body 1, 2 has been provided with bulkheads 8, 9 and flanges 10, 11. These have been connected to the central body 1, 2 e. g. by glueing and/or bolting. The bulkheads in turn support the fuel tanks 12, 13 as well as the outer plating 14 of the satellite.

## Claims

1. Method for manufacturing a bearing structure of a spacecraft, which structure has a shaped lower part (2) adapted to be fitted on top of a launcher, comprising the steps of providing a mandrel having a cross section through its longitudinal axis defining an at least partially hyperbolic or exponential shape, winding fibres (5, 6, 7) onto the mandrel, fixing the fibres (5, 6, 7) by applying a matrix material, and removing the bearing structure thus formed from the mandrel.

2. Method according to claim 1, wherein part of the fibres (5) is wound at an angle of approximately 35 degrees with respect to the axis of the mandrel.

3. Method according to claim 2, wherein part of the fibres (7) is wound at an angle of approximately 90 degrees with respect to the axis of the mandrel.

4. Method according to claim 3, wherein approximately the outer layer and/or the inner layer consist of fibres (7), wound at an angle of approximately 90 degrees.

5. Bearing structure manufactured by means of the method according to one of the preceding claims, wherein the lower part (2) has a hyperbolic or exponential shape.

6. Bearing structure according to claim 5, wherein the upper part (1) is cylindrical.

7. Bearing structure according to claim 5 or 6 wherein at the ends of both the upper (1) and the lower (2) part reinforcing rings (3, 4) are provided.

8. Bearing structure according to claim 5, 6 or 7, wherein at least one supporting bulkhead is provided on the outer surface of the structure.

## Patentansprüche

1. Verfahren zum Herstellen einer Tragekonstruktion für ein Raumschiff, wobei die Konstruktion ein geformtes unteres Teilstück (2) aufweist, angepaßt, um auf die Oberfläche einer Trägerrakete gesetzt zu werden, welches die folgenden Schritte umfaßt:
Bereitstellen eines Formkerns mit einem Querschnitt durch die Längsachse, welcher eine mindestens teilweise hyperbolische oder exponentielle Form definiert,
Wickeln von Fasern (5, 6, 7) auf den Formkern,
Fixieren der Fasern (5, 6, 7) durch Auftragen eines Matrixmaterials, und
Entfernen der so ausgebildeten Tragekonstruktion von dem Formkern.

2. Verfahren gemäß Anspruch 1, wobei ein Teil der Fasern (5) in einem Winkel von ungefähr 35° mit Bezug zu der Achse des Formkerns gewickelt ist.

3. Verfahren gemäß Anspruch 2, wobei ein Teil der Fasern (7) in einem Winkel von ungefähr 90° mit Bezug zu der Achse des Formkerns gewickelt ist.

4. Verfahren gemäß Anspruch 3, wobei etwa die äußere Schicht und/oder die innere Schicht aus Fasern (7) besteht, die in einem Winkel von ungefähr 90° gewickelt sind.

5. Tragekonstruktion hergestellt mittels des Verfahrens gemäß einem der vorhergehenden Ansprüche, wobei das untere Teilstück (2) eine hyperbolische oder exponentielle Form aufweist.

6. Tragekonstruktion gemäß Anspruch 5, wobei das obere Teilstück (1) zylindrisch ist.

7. Tragekonstruktion gemäß Anspruch 5 oder 6, wobei an den Enden von dem oberen Teilstück (1) und dem unteren Teilstück (2) Verstärkungsringe (3, 4) bereitgestellt sind.

8. Tragekonstruktion gemäß Anspruch 5, 6 oder 7, wobei mindestens eine stützende Trennwand an der äußeren Oberfläche der Konstruktion bereitgestellt ist.

## Revendications

1. Procédé de fabrication d'une structure portante d'un engin spatial, laquelle structure a une partie inférieure (2) de forme adaptée pour être montée sur la partie supérieure d'un lanceur, comprenant les étapes consistant :
- à prévoir un mandrin ayant une section transversale au travers de son axe longitudinal définissant au moins partiellement une forme hyperbolique ou exponentielle,
- à enrouler des fibres (5, 6, 7 sur le mandrin,
- à fixer les fibres (5, 6, 7) en appliquant un matériau de base, et
- à enlever du mandrin la structure portante ainsi formée.

2. Procédé selon la revendication 1, dans lequel une partie des fibres (5) est enroulée suivant un angle approximativement de 35 degrés par rapport à l'axe du mandrin.

3. Procédé selon la revendication 2, dans lequel une partie des fibres (7) est enroulée suivant un angle approximativement de 90 degrés par rapport à l'axe du mandrin.

4. Procédé selon la revendication 3, dans lequel approximativement la couche extérieure et/ou la couche intérieure se composent de fibres (7) enroulées suivant un angle approximativement de 90 degrés.

5. Structure portante fabriquée en utilisant le procédé selon l'une des revendications précédentes, dans laquelle la partie inférieure (2) a une forme hyperbolique ou exponentielle.

6. Structure portante selon la revendication 5, dans laquelle la partie supérieure (1) est cylindrique.

7. Structure portante selon la revendication 5 ou 6, dans laquelle il est prévu des bagues de renfort (3, 4) au niveau des extrémités à la fois de la partie supérieure (1) et inférieure (2).

8. Structure portante selon les revendications 5, 6 ou 7, dans laquelle il est prévu au moins une cloison support sur la surface extérieure de la structure.
